(19) Europäisches Patentamt
European Patent Office
Office européen des brevets

(11) Publication number: 0 383 977 A1

# (12) EUROPEAN PATENT APPLICATION

(21) Application number: 89103163.5

(22) Date of filing: 23.02.89

(51) Int. Cl.[5] C08L 79/08, //(C08L79/08, 67:02,53:02)

(43) Date of publication of application:
29.08.90 Bulletin 90/35

(84) Designated Contracting States:
DE FR GB IT NL

(71) Applicant: GENERAL ELECTRIC COMPANY
1 River Road
Schenectady New York 12305(US)

(72) Inventor: Gaafar, Gail Magda
3315 Wimberg Avenue
Evansville Indiana 47712(US)

(74) Representative: Catherine, Alain
General Electric France Service de Propriété
Industrielle 18 Rue Horace Vernet
F-92136 Issy-Les-Moulineaux Cedex(FR)

## (54) Polyetherimide blends.

(57) A polyetherimide composition comprising at least one polyetherimide; at least one polyester; and at least one monoalkenyl arene-conjugated diene copolymer or copolymer composition.

EP 0 383 977 A1

# POLYETHERIMIDE BLENDS

## BACKGROUND

The present invention relates to a class of polyetherimide blends comprising a polyetherimide, a polyester, and a monoalkenyl arene--conjugated diene copolymer or copolymer composition.

Certain blends of polyetherimides and other polymers are known. For example, U.S. Pat. No., 4,141,927 discloses a polyetherimide-polyester binary mixture. U.S. Pat No. 4,259,458 discloses a blend containing a polyarylate, a polyester, and at least one thermoplastic polymer selected from the group consisting of an aromatic polycarbonate, a styrene resin, an alkyl acrylate resin, a polyurethane, a vinyl chloride polymer, a poly(aryl ether), a copolyetherester block polymer or a polyhydroxyether.

## SUMMARY OF THE INVENTION

In accordance with the present invention, a polyetherimide blend is prepared comprising at least one polyetherimide, at least one polyester; and at least one monoalkenyl arene-conjugated diene copolymer or copolymer composition.

## DETAILED DESCRIPTION

The invention relates to a class of polyetherimide blends comprised of the following elements: (1) a polyetherimide, and (2) a polyester and (3) a monoalkenyl arene-conjugated diene copolymer or copolymer composition. Preferably these blends are comprised of, for 100 weight parts, about 50 to about 80 parts by weight of a polyetherimide; from about 10 to about 25 parts by weight of a polyester, and from about 10 to about 25 parts by weight of a monoalkenyl arene-conjugated diene copolymer or copolymer competition. These blends exhibit improved impact strengths, as compared to those of the unmodified polyetherimide compositions. Additionally, these blends show dramatically lower processing temperatures than the unmodified polyetherimide composition and higher heat resistance than the polyester.

The blends of the.invention include a polyetherimide of the formula:

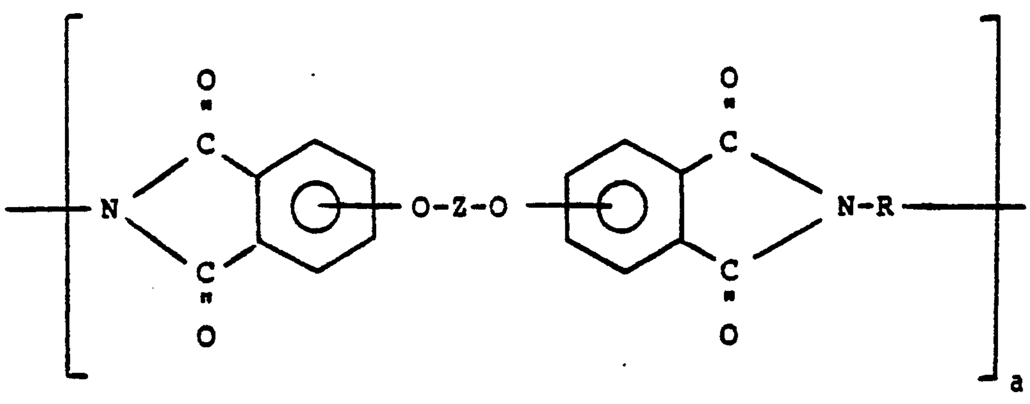

where "a" represents a whole number in excess of 1, e.g. 10 to 10,000 or more, Z is a member selected from the class consisting of (1):

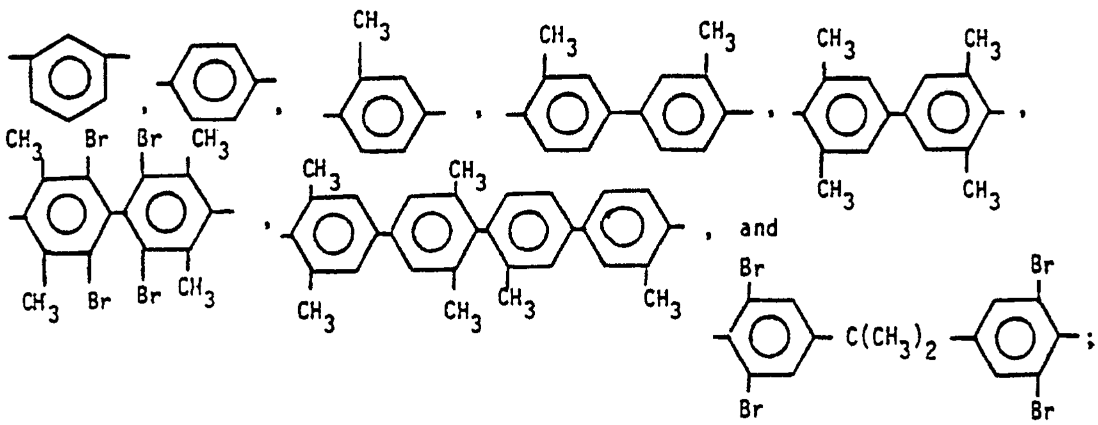

, and ;

and (2) divalent organic radicals of the general formula:

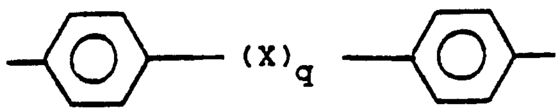

where X is a member selected from the class consisting of divalent radicals of the formulas,

$$-C_yH_{2y}-,\ -\overset{\overset{O}{\|}}{C}-,\ -\underset{\underset{O}{\|}}{\overset{\overset{O}{\|}}{S}}-,\ -O-\ \text{and}\ -S-,$$

where q is 0 or 1, y is a whole number from 1 to 5, and divalent bonds of the -O-Z-O-radical are situated on the phthalic anhydride end groups, e.g., in the 3,3′, 3,4′, 4,3′, or the 4,4′ positions, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from about 2 to about 20 carbon atcms, $C_2$-$C_8$ alkylene terminated polydiorganosiloxane, and (3) divalent radicals of the formula:

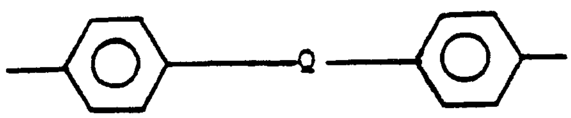

where Q is a member selected from the class consisting of:

$$-C-,\ -O-,\ -\overset{\overset{O}{\|}}{C}-,\ -\underset{\underset{O}{\|}}{\overset{\overset{O}{\|}}{S}}-,\ \text{and}\ -C_xH_{2x}$$

where x is a whole number from 1 to 5 inclusive.

The polyetherimides can be obtained to any of the methods well known to those skilled in the art including the reaction of any aromatic bis(ether anhydride) of the formula:

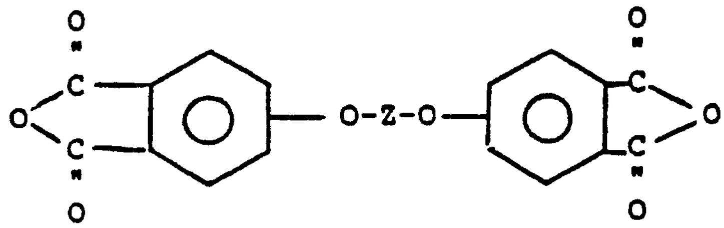

where Z is as defined above with an organic diamine of the formula

$H_2N-R-NH_2$

where R is as defined above.

Aromatic bis-(ether anhydride)s of the above formula include, for example
2,2-bis[4-(2,3-dicarboxyphenoxy)-phenyl]-propane dianhydride;
4,4′-bis(2-dicarboxyphenoxy)diphenyl ether dianhydride;
1,3-bis(2,3 dicarboxyphenoxy)benzene dianhydride;
4,4′-bis(2,3-dicarboxyphenoxy)diphenyl sulfide dianhydride;
1,4-bis(2-dicarboxyphenoxy)benzene dianhydride;
4,4′-bis(2,3-dicarboxyphenoxy) benzophenone dianhydride;
4,4′-bis(2,3-dicarboxyphenoxy)diphenyl sulfone dianhydride;
2,2-bis[4-(3,4-dicarboxyphenoxy)phenyl]propane dianhydride;
4,4′bis(3,4-dicarboxyphenoxy)diphenyl ether dianhydride;
4,4′-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride,
4,4′-bis(3,4-dicarboxyphenoxy)benzophenone dianhydride;
4-(2,3-dicarboxyphenoxy )-4′ (3, 4-dicarboxyphenoxy )diphenyl-2,2-prop ane dianhydride; etc. and mixtures of such dianhydrides.

In addition, aromatic bis(ether anhydride)s included by the above formula are shown by Koton, M.M.; Florinski, F.S.; Bessonov, M.I.; Rudakov, A.P. (Institute of Heteroorganic compounds, Academy of Sciences, U.S.S.R.), U.S.S.R. No. 257,010, Nov. 11, 1969, Appl. May 3, 1967. Such dianhydrides are also shown by M.M. Koton, F.S. Florinski, Zh. Org. Khin; 4(5),774 (1968).

Organic diamines of the above formula, include, for example, m-phenylenediamine, p-phenylenediamine, 4,4′-diaminodiphenylpropane, 4,4′-diaminodiphenylmethane, benzidine, 4,4′-diaminodiphenyl sulfide, 4,4′-diaminodiphenyl sulfone, 4-4′-diaminodiphenyl ether, 1,5 diaminonaphthalene, 3,3′-dimethylbenzidine, 3,3′-dimethoxybenzidine, 2,4-bis(-amino-t-butyl)toluene, bis(p- -amino-t-butylphenyl)ether, bis(p-methyl-o-aminopentyl)benzene, 1,3-diamino-4-isopropylbenzene, 1,2 bis(3-aminopropoxy)ethane, m-xylylenediamine, p-xylylenediamine, 2,4-diaminotoluene, 2,6-diaminotoluene bis(4-aminocyclohexyl)methane, 3-methylheptamethylenediamine, 4,4-dimethylheptamethylenediamine, 2,11-dodecanediamine, 2,2 dimethylpropylenediamine, octamethylenediamine, 3-methoxyhexamethylenediamine, 2,5-dimethylhexamethylenediamine, 2,5-dimethylheptomethylenediamine, 3-methylheptamethylenediamine, 5-methylnonamethylenediamine, 1,4-cyclohexanediamine, 1,l2-octadecanediamine, bis(3-aminopropyl)-sulfide, N-methyl-bis (3-aminopropyl)amine, hexamethylenediamine, heptamethylenediamine, nonamethylenediamine, decamethylenediamine, bis(3-aminopropyl) tetramethyldisiloxane, bis(4-aminobutyl) tetramethyldisiloxane, and the like.

In general, the reactions can be advantageously carried out employing well-known solvents, e.g., o-dichlorobenzene, m-cresol/toluene,etc. in which to effect interaction between the dianhydrides and the diamines, at temperatures of from about 100°C. to about 250°C. Alternatively, the polyetherimides can be prepared by melt polymerization of any of the above dianhydrides with any of the above diamine compounds while heating the mixture of the ingredients at elevated temperatures with concurrent intermixing. Generally, melt polymerization temperatures between about 200°C. to 400°C. and preferably 230°C. to 300°C. can be employed. The conditions of the reaction and the proportions of ingredients can be varied widely depending on the desired molecular weight, intrinsic viscosity, and solvent resistance. In general, equimolar amounts of diamine and diahydride are employed for high molecular weight polyetherimides, however, in certain instances, a slight molar excess (about 1 to 5 mole percent) of diamine can be employed resulting in the production of polyethermides having terminal amine groups. Generally, useful polyetherimides have an intrinsic viscosity greater than 0.2 deciliters per gram, preferably 0.35 to 0.60, or 0.7 deciliters per gram or even higher when measured in m-cresol at 25 C.

The second component of this blended composition is a polyester.

The polyesters that can be employed in the blends of this invention are conventional or known polyesters made according to conventional or known methods. The polyesters include polymers formed from dicarboxylix acids containing a total of from about 2 to about 16 carbon atoms reacted with polyhydric alcohls such as glycols or diols containing from 2 to 12 carbon atoms. Aliphatic dicarboxylic acids may contain a total of from 2 to 16 carbon atoms. Preferably, the acids are aryl or an alkyl substituted aromatic acids containing from 8 to 16 carbon atoms. Specific examples of linear aliphatic dicarboxylic acids include oxalic acid, malonic acid, suberic acid, azelaic acid, sebacic acid, and the like. Specific examples of an aryl acid include the various isomers of phtalic acid, such as paraphthalic acid (terephthalic acid) and naphthalic acid. Specific examples of alkyl substitued aryl acids include the various isomers of dimethylphtalic acid such as dimethylisophtalic acid, dimethylorthophthalic acid, dimethylterephthalic acid, the various isomers of diethylphthalic acid such as diethylisophthalic acid, diethylorthophthalic acid, diethylterephthalic acid, the various isomers of dimethylnaphthalic acid such as 2,6-dimethylnaphthalic acid and 2,5-dimethylnaphthalic acid, and the various isomers of dimethylnaphthalic acid such as 2,6-dimethylnaphthalic acid and 2,5-dimethylnaphthalic acid, and the various isomers of diethylnaphthalic acid. Particularly preferred is terephthalic acid. When two or more dicarboxylic acids are used, it is particularly preferred that at least 90 mole percent of the total acid moeity be terephthalic acid. Generally an excess of 95 mole percent terephthalic is the most preferred.

It is well known to those skilled in the art that in lieu of the various dicarboxylic acids, the various diesters thereof may be utilized. Thus, alkyl diesters containing a total of from 2 to about 20 carbon atoms as well as alkyl substitued aryl diesters containing from about 10 to about 20 carbon atoms may be utilized. Examples of diesters include the diesters of oxalic acid, malonic acid, succinic acid, glutaric acid, adipic acid, pimelic acid, suberic acid, azelaic acid, or sebacic acid, and the like. Specific examples of various alkyl substituted aryl diesters include the various isomers of dimethylphthalate such as dimethylterephthalate, a preferred compound, the various isomers of diethylphthalate, the various isomers of dimethylnaphthalate, and the various isomers of diethylnaphthalate.

The diols of glycols may be straight chain or branched. The diols may also be aliphatic or cycloaliphatic. Specific examples include ethylene glycol, propylene glycol, trimethylene glycol, 1,2-butanediol, 1,3-butanediol, 1,4-butanediol, 2,3-butanediol, neopentyl glycol, cyclohexanedimethanol, and the like. Of the various glycols, those having from 2 to 8 carbon atoms are preferred with ethylene glycol being particularly preferred. In lieu of the various glycols, another class of polythydric alcohols, such as the glycol ethers, containing from 4 to 12 atoms, can be utilized as for example dimethylene glycol and 1,4-dihydroxyethoxy benzene.

The polyesters employed in the blends of this invention can generally be made according to conventional melt polymerization, or melt and solid state polymerization techniques.

The third component of this blended composition is a monoalkenyl arene-conjugated diene copolymer or copolymer composition.

The monoalkenyl arene-conjugated diene copolymers suitable for use in the present invention are selected from ABA type block copolymers and core-shell type copolymers. Further, the term, "monoalkenyl arene-conjugated diene" copolymers is intended to include copolymers having additional comonomers therein as long as both monoalkenyl arene monomers and conjugated diene monomers are each present in an amount of at least about 10 mole percent based on total monomer content of the copolymer.

As stated above, suitable block copolymers comprise at least two monoalkenyl arene polymer end blocks A and at least one hydrogenated, partially hydrogenated or non-hydrogenated conjugated diene polymer mid block B, said block copolymer having an 8 to 55 percent by weight monoalkenyl arene polymer block content, each polymer block A having an average molecular weight of between about 5,000 and about 125,000, and each polymer block B having an average molecular weight of between about 10,000 and about 300,000.

These block copolymers may have a variety of geometrical structures, since the invention does not depend on any specific geometrical structure, but rather upon the chemical constitution of each of the polymer blocks. Thus, the structures may be linear, radial or branched so long as each copolymer has at least two polymer end clocks A and at least one polymer mid block B as defined above. The specific structure of the polymers is determined by their methods of polymerization. For example, linear polymers result by sequential introduction of the desired monomers into the reaction vessel when using such initiators as lithium-alkyls or dilithiostilbene and the like, or by coupling a two segment block copolymer with a difunctional coupling agent. Branched structures, on the other hand, may be obtained by the use of suitable coupling agents having a functionality with respect to the polymers or precursor polymers where hydrogenation of the final block polymer is desired, of three or more. Coupling may be effected with multi-functional coupling agents such as dihaloalkanes or dihaloalkenes and divinyl benzene as well as certain polar compounds such as silicon halides, siloxanes or esters or monohydric alcohols with carboxylic acids. The presence of any coupling residues in the polymer may be ignored for an adequate description of the polymers forming a part of the composition of this invention. Likewise, in the generic sense, the specific structures also may be ignored.

Various methods, including those as mentioned above, for the preparation of the block copolymers are known in the art. For example, such polymers, including processes for the hydrogenation thereof, where desired, are disclosed is U.S. Patent Numbers 3,149,182; 3,595,947; 3,694,523; 3,287,333; 3,321,635 and 3,842,029, all incorporated herein by reference. In such processes, particular preference is made to the use of lithium based catalysts and especially lithium alkyls for the preparation of the block polymers.

Exemplary of typical species of block copolymers there may be given:
polystyrene-polybutadiene-polystyrene (SBS);
polystyrene-polyisoprene-polystyrene (SIS);
poly(alpha-methylstyrene)- polybutadiene-poly(alpha-methylstyrene); and poly(alpha-methylstyrene-polyisoprene-poly(alpha-methystyrene).

It will be understood that both block A and B may be either homopolymer or random copolymer blocks as long as each block predominates in at least one class of the monomers characterizing the blocks and as long as the A block individually predominate in monoalkenyl arenes and the B blocks individually predominate in dienes. The term "monoalkenyl arene" will be taken to include especially styrene and its analogs and homologs including alph-methylstyrene and ring-substituted styrenes, particularly ring-methylated styrenes. The preferred monoalkenyl arenes are styrene and alpha-methylstyrene, and styrene is particularly preferred. The B blocks may comprise homopolymers of butadiene or isoprene and copolymers of one of these two dienes with a monoalkenyl arene as long as the B blocks predominate in conjugated diene units. When the monomer employed is butadiene, it is preferred that between about 35 and about 55 mole percent of the condensed butadiene units in the butadiene polymer block have 1,2 configuration. Thus, when a hydrogenated or partially hydrogenated block copolymer is desired, it is or has segments which are or resemble a regular copolymer block of ethylene and butene-1 (EB). If the conjugated diene employed is isoprene, the resulting hydrogenated product is or resembles a regular copolymer block of ethylene and propylene (EP).

When hydrogenation of the block copolymer is desired, it may be and is preferably effected by use of a catalyst comprising the reaction products of an aluminum alkyl compound with nickel or cobalt carboxylates or alkoxides under such conditions as to preferably substantially completely hydrogenate at least 80% of the aliphatic double bonds while hydrogenating no more than about 25% of the alkenyl arene aromatic double bonds. Preferred hydrogenated block copolymers are those where at least 99% of the aliphatic double bonds are hydrogenated while less than 5% of the aromatic double bonds are hydrogenated.

The average molecular weights of the individual blocks may vary within certain limits. In most instances, the monoalkenyl arene blocks will have number average molecular weights in the order of 5,000-125,000 preferably 7,000-60,000 while the conjugated diene blocks either before or after hydrogenation will have average molecular weights in the order of 10,000-300,000, preferably 30,000-150,000. The total average molecular weight of the block copolymer is typically in the order of 25,000 to about 350,000, preferably from about 35,000 to about 300,000. These molecular weights are most accurately determined by tritium counting methods or osmotic pressure measurements.

The proportion of the monoalkenyl arene blocks should be between about 8 and 55% by weight of the block copolymer, preferably between about 10 and 30% 'by weight.

The second class of monoalkenyl arene-conjugated diene copolymers are of the core-shell type. In general these are characterized and having a predominately corrugated diene rubbery core and one or more shells graft polymerized thereon and derived from monoalkenyl arene monomers alone or, preferably, in combination with other vinyl monomers.

More particularly, the first or core phase of the core-shell copolymer comprises polymerized conjugated diene units of one or more conjugated dienes alone or copolymerized with units of a vinyl monomer or mixture of vinyl monomers. Suitable conjugated dienes for use in said core phase include butadiene, isoprene, 1,3-pentadiene and the life. Illustrative of the vinyl monomers copolymerizeable therewith include the vinyl aromatic compounds such a styrene, alpha-methylstyrene, vinyl toluene, para-methylstyrene and the like; esters of acrylic and methacrylic acid, including for example methyl acrylate, ethyl acrylate, butyl acrylate, methyl methacrylate and ethyl methacrylate; and unsaturated aliphatic nitriles such as acrylonitrile, methacrylonitrile and the like. The core of said copolymer should comprise at least about 50 percent by weight of the conjugated diene. Preferred grafted core-shell copolymers for use herein comprise a core of polybutadiene homopolymer or a styrene-butadiene copolymer comprising about 10 to 50% by weight

styrene and about 90 to 50% by weight of butadiene, having a molecular weight of from about 150,000 to about 500,000. The core phase may also include a cross-linking monomer, more particularly described below.

The final or shell phase of the copolymer comprises polymerized units of amonoalkenyl arene alone or copolymerized with one or more other vinyl monomers wherein at least 10 mole percent of the graft component is derived from the monoalkenyl arene monomer. Preferred monoalkenyl arene monomers are styrene, alpha-methylstyrene, para-methylstyrene and the like, most preferably styrene. Additional monomers that may be copolymerized therewith in an amount up to 90 mole % include the esters of acrylic and methacrylic acid including for example, ethyl acrylate, methyl actylate, butyl actylate, methyl methacrylate, ethyl methacrylate, butyl methacrylate and the like, unsaturated aliphatic mitrile such as acrylonitrile and methacrylomitrile and vinyl halides such as vinyl chloride and vinyl bromide. Especially preferred shells are those derived from polymerized units of styrene and methyl methacrylate wherein each is present in an amount of from 10 to 90 mole %. Additionally, these shells may also have copolymerized therewith a minor amount, preferably less than 10 mole % of one or more of the other aforementioned monomer units. As with the core, the shell phase may also include a cross-linking monomer as discussed more fully below.

Optionally, the core-shell copolymers may further comprise one or more cross-linked or non-cross linked intermediate layers which is grafted to the core and upon which the final shell layer is grafted, comprised of one or more polymerized vinyl monomer. Suitable vinyl monomers for one in these intermediate layers include but are not limited to those mentioned above, especially polystyrene. Where such intermediate layers are present in the core-shell copolymer and are derived from at least 10 mole % of a monoalkenyl arene monomer, the final or shell phase may comprise up to and including 100 mole % monomer units which are not monoalkenyl arene units. Especially preferred in such instances are multiphase copolymers wherein the intermediate phase comprises polystyrene and the final stage comprises polymethylmethacrylate.

As mentioned each of the individual stages of the core-shell copolymers may contain a cross-linking monomer which may serve not only to cross-link the units of the individual layers but also graft-link the shell to the core. As the cross-linking agent for use in preparation of the core-shell copolymers, those which copolymerize smoothly with the monomer in the respective stages of the reaction should be selected. Representative cross-linking agents including, but are not limited to aromatic polyfunctional vinyl compounds such as divinyl benzene, trivinyl benzene, divinyl toluene and the like; di- and tri-methacrylates and di- and triacrylates of polyols represented by monoethylene-, diethylene-and triethylene glycols, 1,3-butanediol and glycerin allyl esters of unsaturated aliphatic carboxylic acid such as allyl acrylate, allyl methacrylate and the like and di- and triallyl compounds such as diallyl phthalate, diallyl sebacate, triallytriazine and the like are mentioned.

While the amount of cross-linking agent employed is from about 0.01 to 3.0% by weight based on the monomer charge for each stage of the reaction, generally, the total amount of cross-linking agent in the final graft copolymer will preferably be less than 3.0 weight percent.

The core-shell copolymers suitable for use herein generally comprise from about 50 to about 90 weight percent of the core and from about 10 up to 50 weight percent of the graft or shell phase. Where an intermediate phase or layer is present in the graft copolymer the shell and intermediate phase will each comprise from about 5 to about 25 weight percent of the copolymer.

The core-shell graft copolymers for use in the present invention are prepared by the conventional method of emulsion polymerization, however, in an alternative method, graft copolymerization may be carried out after suitably coagulating the latex of cross-linked trunk polymer for adjusting the size of the latex particles of the trunk polymer.

Also, during polymerization the monomeric components used in the graft copolymerization may be brought into reaction in one step, or in multiple steps while supplying them in portions of suitable ratio of the present invention between the components.

Specific examples of suitable core-shell graft copolymers and the production thereof are disclosed in for example U.S. Patent Numbers 4,180,494 and 4,292,233; herein incorporated by reference. Commercially available grafted core-shell copolymers for use herein include KM653 and KM6ll from ROHM and Haas Chemical Company.

Methods for forming the polyetherimide blends of the present invention may vary considerably. Prior art blending techniques are generally satisfactory. A preferred method comprises blending the polymers, extruding the blend, and chopping the extrudate into pellets suitable for molding by means conventially used to mold normally solid thermoplastic compositions.

The invention is further illustrated by the following example, which is not intended to be limiting.

## EXAMPLE

The following general procedure is used for blending and extruding the composite blends of the present invention:

All of the components, with the exception of the polyetherimide compostion, were blended for ten minutes in a fifty-gallon drum tumbler. The blended components and the polyetherimide composition were then extruded in a 2-1/2" Egan single screw extruder at a temperature of 650°F. at the feedthroat. The blend was then fed in a sidefeed where the temperature was 500°F. The extruded strands were cooled and cut by a rotating knife.

The table below lists the proportion of each component of the polyetherimide blend as well as the resulting properties. The Izod impact data was determined from tests based on ASTM method D-256. The heat deflection temperature (HDT) was determined from tests based on ASTM method D-1637. The Dynatub impact information was determined from tests based on ASTM method D-4272.

The polyetherimide composition utilized in the blend of the following Example was Ultem 1000, from General Electric Company, a polyetherimide of the formula

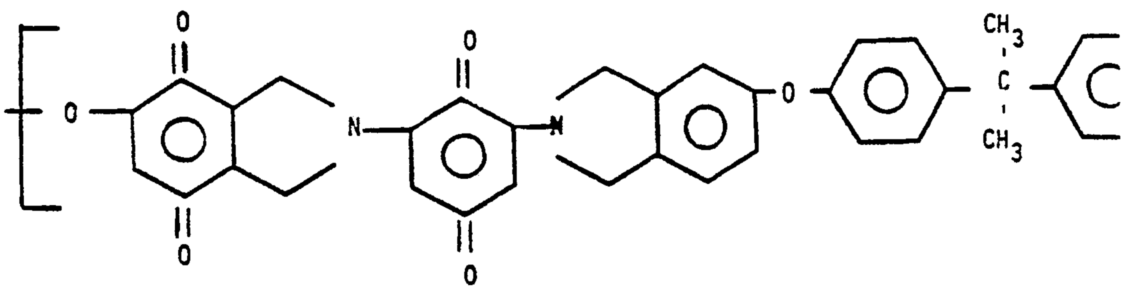

wherein "n" is the degree of 'polymerisation, which corresponds to a number-average molecular weight ($\overline{M_n}$) of approximately 19,200 (measured by the method of vapour pressure osmosis). The relative solution viscosity is 1,228, measured in methylene chloride at 25°C. in a concentration of 0.5 g per 100 ml of solvent.

The polyester that was used in the blend was Valox 315 resin, available from the General Electric Company for poly(1,4-butylene terephthalate) resin.

The monoalkenynl arene-conjugated diene copolymer utilized in the following Example was KM 653 from Rohm and Hass Company, a methylmethacrylate/butadiene/styrene terpolymer.

The stabilizer utilized in the Example was a standard hindered phenolic stabilizer, manufactured by Ciba Geigy under the tradename Irganox 1076, and is octodecy-3,5-di-t-butyl-4-hydroxyhydrocinnamate.

Table I below sets forth, in Extrudate samples Nos. 1 and 2, the components in the composition of the present invention. Table II set forth the physical properties of the resulting blend. Table I also sets forth, in Extrudate sample Nos. 3, the components of a similar system that does not contain the monoalkenyl arene-conjugated diene copolymer. Table II sets forth the physical properties of this samle along with the physical properties of an extruded polyetherimide composition containing no polyester or monoalkenyl arene-conjugated diene copolymer.

TABLE I

| Extrudate Sample | % Polyetherimide | % PET | % KM-653 | % Stabilizer |
|---|---|---|---|---|
| 1 | 63.85 | 20 | 16 | 0.15 |
| 2 | 68.85 | 15 | 16 | 0.15 |
| 3 | 79.85 | 20 | -- | 0.15 |
| 4 | 100 | -- | -- | ---- |

TABLE II

| Extrudate Sample | Extrusion Profile ( F) | HDT (264 psi) ( F) | Notched Izod ft.lbs/in | Dynatub ft/lbs |
|---|---|---|---|---|
| 1 | 500 | 348 | 2.3 | 22.87 |
| 2 | 525 | 316 | 1.3 | 3.23 |
| 3 | 560 | 308 | 1.6 | 2.88 |
| 4 | 650 | 393 | 1.0 | ----- |

Modifications and variations of the present invention will be apparent to those skilled in the art and like of the above teachings. It is, therefore, to be understood that maybe made in the particular embodiments of the invention described which are within the full intended scope of the appended claims.

## Claims

1. A polyetherimide blend comprising (i) a polyetherimide; (ii) a polyester resin; and (iii) a monoalkenyl arene-conjugated diene copolymer.

2. The polyetherimide blend of Claim 1 comprising from (A) about 50 to about 80 parts by weight of a polyetherimide; (B) about 10 to about 25 parts by weight of a polyester resin; and (C) about 10 to 25 parts by weight of a monoalkenyl arene-conjugated diene copolymer.

3. The polyetherimide 'blend of Claim 1 wherein said polyetherimide is of the formula

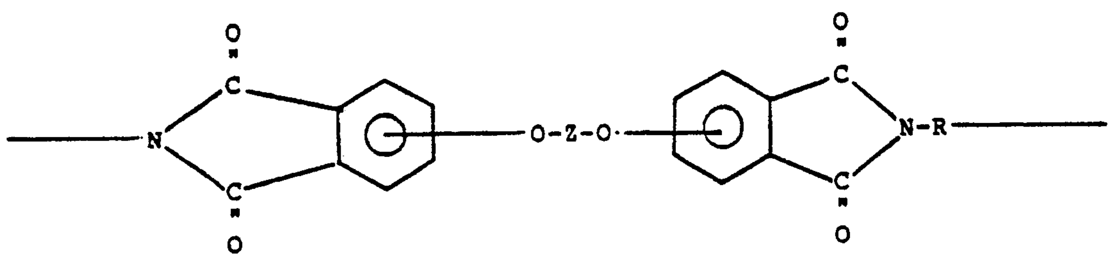

where "a" represents a whole number in excess of 1, e.g. 10 to 10,000 or mole, Z is a member selected from the class consisting of (1):

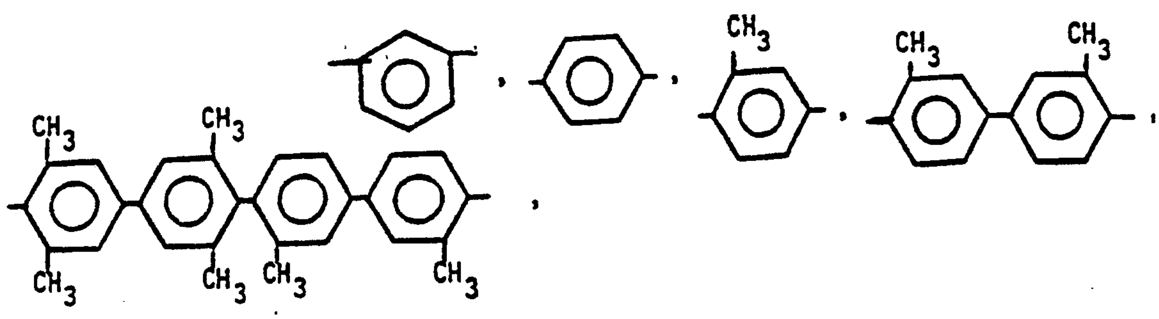

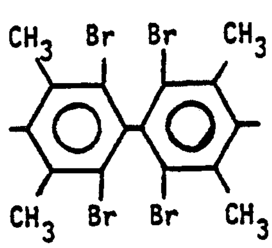

, and

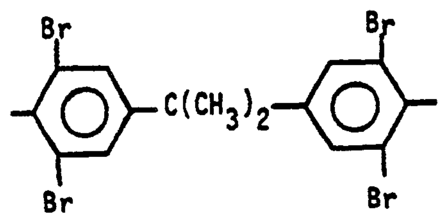

;

and (2) divalent organic radicals of the general formula:

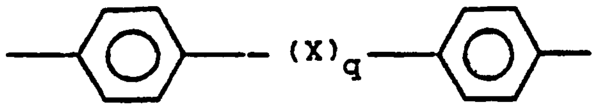

where X is a member selected from the class consisting of divalent radicals of the formulas,

$$-C_yH_{2y}-, -\overset{O}{\overset{\|}{C}}-, -\underset{\underset{O}{\|}}{\overset{O}{\overset{\|}{S}}}-, -O- \text{ and } -S-,$$

where q is 0 or 1, y is a whole number from 1 to 5, and divalent bonds of the -O-Z-O-radical are situated on the phthalic anhydride end groups, e.g., in the 3,3′, 3,4′, 4,3′ or the 4,4′ positions, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from about 2 to about 20 carbon atoms, $C_2$-$C_8$ alkylene terminated polydiorganosiloxane, and (3) divalent radicals of the formula:

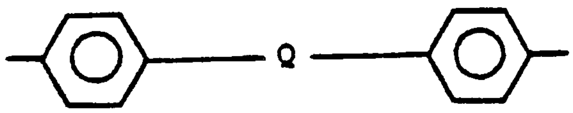

where Q is a member selected from the class consisting of:

$$-O-, -\overset{O}{\overset{\|}{C}}-, -\underset{\underset{O}{\|}}{\overset{O}{\overset{\|}{S}}}-, \text{ and } -C_xH_{2x}$$

where x is a whole number from 1 to 5 inclusive.

4. The polyetherimide of Claim 1 wherein said polyester is made from the reaction of dicarboxylic acid and diesters with a polyhydric alcohol, said dicarboxylic acid selected from the group consisting of alkyl dicarboxylic acids having a total of from 2 to 16 carbon atoms, aryl or alkyl substituted aryl dicarboxylic acids containing a total sum of from 8 to about 16 carbon atoms, and combinations thereof, said diester having from 4 to 20 carbon atoms, an alkyl substituted arylester having from 10 to 20 carbon atoms, and combinations thereof, and wherein said polyhydric alcohol is selected from the group consisting of glycols having from 2 to 11 carbon atoms, from glycol ethers containing from 4 to 12 carbon atoms, and combinations thereof.

5. The polyetherimide of Claim 1 wherein said polyester is polyethylene terephthalate or polybutylene terephthalate.

6. The polyetherimide blend of Claim 5 wherein the polybutylene terephthalate is poly(1,4-butylene terephthalate).

7. The composition of Claim 1 wherein the monoalkenyl arene-conjugated diene copolymer is a block copolymer.

8. The composition of Claim 7 wherein the block copolymer is polystyrene-polybutadiene-polystyrene block copolymer.

9. The composition of Claim 1 wherein the monoalkenyl arene-conjugated diene copolymer is a core-shell copolymer.

10. The composition of Claim 9 wherein the core-shell copolymer is comprised of a polybutadiene core

having polymerized thereon a shell derived from styrene and methylmethacrylate units.

11. The composition of Claim 9 wherein the core-shell copolymer is comprised of a poly(butadiene-styrene) core having polymerized thereon a shell derived from styrene and methylmethacrylate.

European Patent Office

# EUROPEAN SEARCH REPORT

Application Number

EP 89 10 3163

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 156 027 (GENERAL ELECTRIC CO.)<br>* Claims 1-5; page 8, lines 5-9 *<br>----- | 1-11 | C 08 L 79/08 //<br>(C 08 L 79/08<br>C 08 L 67:02<br>C 08 L 53:02 ) |
| | | | **TECHNICAL FIELDS SEARCHED (Int. Cl.5)** |
| | | | C 08 L |

The present search report has been drawn up for all claims

| Place of search | Date of completion of the search | Examiner |
|---|---|---|
| THE HAGUE | 13-10-1989 | GLANDDIER A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document